# FASCICULE DE BREVET EUROPEEN

(11) **EP 3 728 160 B1**
(45) Date de publication et mention de la délivrance du brevet: **24.04.2024**
(21) Numéro de dépôt: 18833455.1
(22) Date de dépôt: 07.12.2018
(51) Int. Cl.: C04B 28/02, C04B 28/04, C04B 28/06, C04B 28/08, C04B 28/14, C04B 111/52, C04B 111/40

(54) **ENDUIT POUR ABSORPTION ACOUSTIQUE**
PUTZ ZUR SCHALLABSORPTION
PLASTER FOR SOUND ABSORPTION

(30) Priorité: 20.12.2017 FR 1762629
(43) Date de publication de la demande: 28.10.2020
(73) Titulaire: SAINT-GOBAIN WEBER, 94370 Sucy-en-Brie (FR)
(72) Inventeur: SAISON, Tamar, 75014 PARIS (FR); HERBET, Hans, 92110 CLICHY (FR); MABROUK, Elyes, 75018 PARIS (FR); BERGER, Sylvain, 75018 PARIS (FR)
(74) Mandataire: Saint-Gobain Recherche
(86) Numéro de dépôt international: PCT/FR2018/053149
(87) Numéro de publication internationale: WO 2019/122574

(56) Documents cités:
- EP-A1- 2 690 075
- WO-A1-2017/013376
- FR-A1- 2 631 331

## Description

L'invention se rapporte au domaine des enduits ayant des propriétés d'absorption acoustique. Elle concerne plus particulièrement des enduits intérieurs ou extérieurs (par exemple des enduits de façade), à base de liant minéral et de granulats, ayant la capacité d'absorber le son, et donc utilisés pour la correction acoustique.

Par « correction acoustique » on entend la modification de la propagation des ondes sonores à l'intérieur d'un volume, afin par exemple de diminuer le volume sonore et/ou de réduire le temps de réverbération à l'intérieur de ce volume. La correction acoustique est à distinguer de l'isolation acoustique, qui consiste à réduire le passage des ondes sonores (bruit aérien et bruit solidien) à travers une paroi séparant deux volumes. Les propriétés recherchées et donc les matériaux utilisés sont différents dans ces deux applications.

Déposés en couches épaisses de quelques millimètres ou dizaines de millimètres sur des parois ou éléments de paroi, les enduits ont une fonction d'imperméabilisation et/ou de finition esthétique desdites parois, qu'elles soient extérieures ou intérieures aux bâtiments.

On connaît des enduits à propriétés d'absorption acoustique, obtenus en utilisant de fortes teneurs en granulats poreux, donc légers, dont la masse volumique est inférieure à 700 kg/m³. Des enduits acoustiques ont également été obtenus à partir de mousses de ciment à très grande porosité, à l'aide de procédés mettant en oeuvre la formation d'une mousse aqueuse puis l'incorporation de ciment et de granulats dans cette mousse. Ces différents enduits sont toutefois faibles mécaniquement, au sens où ils présentent de faibles résistances à la compression, et leur coût de fabrication est élevé.

Le document WO2017013376 divulgue une composition de mortier allégé utilisée comme enduit mural ou de sol, comprenant un liant, des cendres volantes, des fumées de silice, du calcaire, du schiste calciné et/ou des pouzzolanes naturelles ou calcinées, seuls ou en mélange, et/ou une source de sulfate de calcium.

Un but de l'invention est de fournir des enduits ayant à la fois de bonnes propriétés d'absorption acoustique et de bonnes propriétés mécaniques, notamment en termes de résistance à la compression. Un autre but de l'invention est de proposer des enduits peu coûteux à fabriquer.

Ces buts sont atteints grâce à un enduit, notamment destiné à la correction acoustique, comprenant :
- au moins un liant minéral,
- des granulats, dont :
   ∘ des granulats légers, dont la masse volumique est d'au plus 700 kg/m³, en une teneur d'au moins 4% et d'au plus 20% en poids par rapport au poids de l'enduit,
   ∘ des granulats lourds, dont la masse volumique est d'au moins 1500 kg/m³, en une teneur d'au moins 50% en poids par rapport au poids de l'enduit,

la fraction massique des granulats ayant une taille d'au moins 0,5 mm étant d'au moins 40%,
ledit enduit présentant une masse volumique allant de 700 à 1200 kg/m³ et une résistivité à l'écoulement de l'air selon la norme ISO 9053 :1991 allant de 1.10⁴ N.s.m⁻⁴ à 5.10⁵ N.s.m⁻⁴.

L'invention a également pour objet une composition de mortier sec prêt à gâcher, apte à former après gâchage et durcissement un enduit selon l'invention, ladite composition comprenant :
- au moins un liant minéral,
- des granulats, dont :
   ∘ des granulats légers, dont la masse volumique est d'au plus 700 kg/m³, en une teneur d'au moins 4% et d'au plus 20% en poids par rapport au poids de la composition,
   ∘ des granulats lourds, dont la masse volumique est d'au moins 1500 kg/m³, en une teneur d'au moins 50% en poids par rapport au poids de la composition,
      la fraction massique des granulats ayant une taille d'au moins 0,5 mm étant d'au moins 40%,
- au moins un agent entraîneur d'air de type tensioactif,
- au moins un agent viscosant.

Les inventeurs ont pu mettre en évidence qu'un choix particulier des constituants de l'enduit et de la composition de mortier, et des teneurs respectives de ces constituants, permettait d'obtenir des microstructures présentant de larges pores interconnectés, se traduisant par une résistivité à l'écoulement de l'air adéquate conduisant à une bonne absorption acoustique. Une résistivité à l'écoulement de l'air plus élevée ou plus basse conduirait à une diminution de l'absorption acoustique. Il devient ainsi possible d'atteindre de bonnes propriétés acoustiques pour des enduits ayant une masse volumique compatible avec une bonne résistance à la compression.

Le liant minéral est de préférence un liant hydraulique ou aérien, de préférence hydraulique. Un liant hydraulique est un liant capable de durcir par réaction avec l'eau, donc par mise en oeuvre de réactions d'hydratation tandis qu'un liant aérien est un liant capable de durcir par réaction avec l'air, notamment par réaction de carbonatation.

Au moins un liant minéral est de préférence choisi parmi :
- les ciments Portland, les ciments alumineux, les ciments sulfoalumineux, les ciments bélitiques, les laitiers de haut fourneau, les ciments phosphomagnésiens, les ciments de mélange pouzzolaniques comprenant éventuellement des cendres volantes, des fumées de silice, du calcaire, du schiste calciné et/ou des pouzzolanes naturelles ou calcinées, seuls ou en mélange, et/ou,
- une source de sulfate de calcium choisie parmi le plâtre ou hémihydrate, le gypse et/ou l'anhydrite, et/ou
- de la chaux aérienne ou hydraulique, naturelle ou artificielle.

On entend par granulats lourds au sens de la présente invention des granulats dont la masse volumique est supérieure à 1500 kg/m³. La masse volumique des granulats lourds est de préférence comprise entre 2000 et 3000 kg/m³, notamment entre 2200 et 2700 kg/m³. Les granulats lourds sont des constituants souvent minéraux, inertes, qui sont selon leur taille qualifiés de sables ou de fillers, notamment au sens de la norme NF P 18-541. De préférence, l'enduit selon l'invention comprend des sables et des fillers.

Les granulats lourds sont de préférence choisis parmi les sables de quartz, les sables de calcaire, les sables siliceux et leurs mélanges. La teneur en granulats lourds par rapport au poids de l'enduit ou de la composition de mortier est de préférence comprise dans un domaine allant de 55% à 80%, notamment de 60 à 75%.

On entend par granulats légers au sens de la présente invention des granulats dont la masse volumique est d'au plus 700 kg/m³. La masse volumique des granulats légers est de préférence comprise entre 400 et 650 kg/m³, notamment entre 500 et 600 kg/m³.

Les granulats légers sont de préférence choisis parmi la perlite, la vermiculite, les billes de verre expansé, les microsphères creuses de verre, les cénosphères, les silicates expansés, les aérogels, les billes de polystyrène expansé, le liège et leurs mélanges.

La présence de granulats légers s'est révélée nécessaire pour atteindre de bonnes performances en termes d'absorption acoustique. Une trop grande teneur en granulats légers est toutefois néfaste à l'obtention de bonnes propriétés mécaniques de l'enduit. La teneur en granulats légers est de préférence d'au plus 15%, notamment 12% et même 10% en poids par rapport au poids de l'enduit ou de la composition de mortier. Elle est avantageusement d'au moins 6%, notamment 7% et même 8% en poids.

La présence dans l'enduit ou la composition de mortier de granulats « intermédiaires », d'une masse volumique supérieure à 700 kg/m³ et inférieure à 1500 kg/m³ est possible, par exemple en des teneurs inférieures à 10% en poids, notamment 5% par rapport au poids de l'enduit ou de la composition de mortier. De préférence, l'enduit ou la composition de mortier ne contient pas de granulats intermédiaires.

La fraction massique des granulats ayant une taille d'au moins 0,5 mm est d'au moins 40%, de préférence 50%, voire même 60%. De préférence, au moins 40%, notamment 50%, voire 60% en poids des granulats ont une taille comprise entre 0,5 et 3,15 mm, notamment entre 0,5 et 2,5 mm, et même entre 0,5 et 2 mm. Par « taille » des granulats on entend le diamètre équivalent déterminé par tamisage à sec. Ainsi, la fraction massique de granulats ayant une taille d'au moins 0,5 mm correspond au pourcentage massique de granulats retenus sur un tamis ayant une ouverture de 0,5 mm.

Afin d'obtenir les propriétés acoustiques désirées, il s'est en effet révélé nécessaire d'avoir une proportion minimale de granulats d'un diamètre d'au moins 0,5 mm. Une trop grande proportion de granulats très fins conduit à une microstructure dont les pores sont de faible diamètre. Une trop grande proportion de granulats très gros conduit quant à elle à une esthétique inappropriée dans le cas d'un enduit de finition.

De préférence, la teneur totale en granulats est comprise entre 60 et 90%, notamment 70 et 85% en poids et/ou la teneur totale en liant minéral est comprise entre 10 et 40%, notamment 15 et 30% en poids par rapport au poids de l'enduit ou de la composition de mortier. Le rapport pondéral entre la teneur totale en granulats et la teneur totale en liant minéral est avantageusement d'au moins 2, notamment 3.

La masse volumique de l'enduit va de préférence de 800 à 1100 kg/m³, notamment de 850 à 1000 kg/m³. Les enduits de faible masse volumique présentent généralement de mauvaises propriétés mécaniques, notamment en compression, tandis que les enduits très denses sont souvent de mauvais absorbants acoustiques. L'invention permet toutefois d'atteindre des propriétés acoustiques équivalentes à celles obtenues jusqu'alors pour des enduits de plus faible masse volumique.

La résistivité à l'écoulement de l'air de l'enduit selon l'invention est de préférence comprise dans un domaine allant de 2.10⁴ N.s.m⁻⁴ à 2.10⁵ N.s.m⁻⁴, notamment de 3.10⁴ N.s.m⁻⁴ à 1.10⁵ N.s.m⁻⁴. La résistivité à l'écoulement de l'air est mesurée selon la norme ISO 9053 :1991 comme décrit plus en détail dans la suite du texte.

L'enduit est utilisé comme enduit intérieur déposé sur murs, cloisons et/ou plafonds, ou comme enduit extérieur, notamment de façade.

L'enduit peut par exemple être déposé sous forme d'une couche de 1 à 3 cm directement sur un mur, par exemple sur un mur maçonné, éventuellement préalablement revêtu d'un premier enduit, aussi bien en intérieur qu'en extérieur, ou sur un parement intérieur, par exemple des plaques de plâtre.

L'enduit peut aussi être déposé sous forme d'une couche de 1 à 7 mm directement sur un matériau absorbant acoustique, notamment de la laine minérale, que ce soit en intérieur ou en extérieur (par exemple dans un système d'isolation thermique par l'extérieur).

La composition de mortier sec selon l'invention comprend au moins un agent entraîneur d'air de type tensioactif. L'agent entraîneur d'air est de préférence choisi parmi les acides gras organiques, les composés sulfatés, les composés sulfonatés et/ou les résines naturelles du bois. La teneur totale en agent entraîneur d'air est de préférence comprise entre 0,005 et 0,1%, notamment entre 0,01 et 0,05% par rapport au poids de la composition de mortier sec.

L'agent viscosant permet d'améliorer la tenue du matériau frais de la phase de gâchage à la phase d'application. L'agent viscosant est de préférence choisi parmi les alcools polyvinyliques, les éthers d'amidon, les éthers de cellulose, les éthers de guar ou les argiles telles que la bentonite. La teneur totale en agent viscosant est de préférence comprise entre 0,01 et 1%, notamment entre 0,03 et 0,5%, voire entre 0,05 et 0,2% par rapport au poids de la composition de mortier sec.

L'enduit ou la composition de mortier peut également comprendre des adjuvants tels que des plastifiants (par exemple des produits à base d'acides polycarboxyliques et de préférence d'éthers polycarboxyliques, des lignosulphonates, des polynaphtalènes sulphonates, des superplastifiants à base de mélamines, des polyacrylates et/ou des copolymères vinyliques), des polymères, notamment sous forme de poudre redispersable, des agents hydrophobes et/ou des inhibiteurs de corrosion. La teneur en adjuvants est typiquement inférieure ou égale à 15%, notamment 10%, par exemple entre 1 et 8%, du poids total de l'enduit ou de la composition de mortier.

L'invention a également pour objet un procédé de préparation d'un enduit selon l'invention, dans lequel on mélange la composition de mortier sec selon l'invention avec de l'eau de gâchage dans un mélangeur pour former un mortier humide, puis l'on dépose ledit mortier humide sur le substrat à enduire. Le rapport pondéral eau sur mortier sec est de préférence compris dans un domaine allant de 0,1 à 1, notamment de 0,1 à 0,5.

Le procédé selon la présente invention peut être mis en oeuvre avec une machine à mortier à gâchage discontinu, dans lequel une quantité définie de pâte est gâchée puis projetée. Il s'agit de machines utilisées de façon classique, comme par exemple les machines de projection Putzmeister SP11. Il peut également être mise en oeuvre de façon continue, par exemple avec une machine à mortier de type Mtec M330. Le procédé selon la présente invention peut également être mis en oeuvre manuellement à l'aide d'une truelle. Une fois le mortier appliqué sur le substrat, il peut-être surfacé à l'aide d'une règle à enduire disposée à 90° du mur.

Un autre objet de l'invention est l'utilisation de l'enduit précité pour absorber les sons.

Dans le cas d'un enduit intérieur, qu'il soit en mur ou en plafond, le but est d'ajuster la correction acoustique à l'intérieur de la pièce, notamment en diminuant le volume sonore et en réduisant le temps de réverbération (afin par exemple d'améliorer l'intelligibilité ou d'obtenir une ambiance plus « feutrée ») dans la pièce. Dans le cas d'un enduit extérieur, il s'agit alors d'absorber les sons émis dans la ville, notamment par les véhicules à moteur, afin de diminuer le niveau sonore dans les rues et donc de réduire la pollution sonore des villes.

Les exemples qui suivent illustrent l'invention de manière non limitative.

Plusieurs compositions de mortier sec, comparatives et selon l'invention, ont été préparées, puis gâchées avec de l'eau pour former un enduit. La quantité d'eau de gâchage a été réglée afin d'obtenir la même viscosité de pâte pour tous les exemples. Le verre expansé ayant tendance à absorber l'eau, il s'est révélé nécessaire d'employer plus d'eau de gâchage.

Les propriétés de l'enduit (masse volumique, résistivité à l'écoulement de l'air, résistance à la compression, facteur d'absorption acoustique) ont ensuite été mesurées après 28 jours de durcissement.

La résistivité à l'écoulement de l'air a été mesurée selon la norme ISO 9053 :1991 (méthode A) avec une vitesse d'écoulement de l'air de 0,5 mm/s.

La résistance à la compression a été mesurée sur des éprouvettes cubiques de 4 cm de côté, avec une vitesse de déplacement de 5 mm/min. Pour chaque exemple, le résultat est une moyenne de mesures réalisées sur 6 éprouvettes.

Le facteur d'absorption acoustique sous incidence normale a été mesuré selon la norme ISO 10534-2 :1998 (technique 1) à l'aide d'un tube d'impédance.

### Exemple A (comparatif) :

Composition (en poids) du mortier sec :
- 69% de de billes de verre expansé de taille supérieure à 0,5 mm, dont la masse volumique est d'environ 540 kg/m³
- 24% de ciment CEM I
- 0,6% de viscosant de type éther de cellulose
- 5,8% de latex.

La composition A a été malaxée avec un ratio pondéral eau sur mortier sec de 2,5.

### Exemple B (comparatif) :

Composition (en poids) :
- 52% de billes de verre expansé de taille supérieure à 0,5 mm, dont la masse volumique est d'environ 540 kg/m³
- 41% de ciment CEM I
- 0,6% de viscosant de type éther de cellulose
- 5,8% de latex.

La composition B a été malaxée avec un ratio pondéral eau sur mortier sec de 1,5.

### Exemple C (comparatif):

Composition (en poids) :
- 43% de sable siliceux (masse volumique d'environ 2600 kg/cm³) et 37% de sable calcaire (masse volumique d'environ 2600 kg/cm³), au moins 50% en poids de ces granulats ayant une taille supérieure à 0,5mm.
- 19% de ciment CEM I
- 0,65% de viscosant de type éther de cellulose
- 0,1% de tensioactif.

La composition C a été malaxée avec un ratio pondéral eau sur mortier sec de 0,29.

### Exemple D (selon l'invention) :

Composition (en poids) :
- 9% de billes de verre expansé de taille supérieure à 0,5mm, dont la masse volumique est d'environ 540 kg/m³
- 65% de sable siliceux (masse volumique d'environ 2600 kg/cm³) dont au moins 50% en poids de taille supérieure à 0,5mm.
- 25% de ciment CEM I
- 0,08% de viscosant de type éther de cellulose
- 0,8% de latex
- 0,02% d'agent entraîneur d'air de type sulfonaté (tensioactif).

La composition D a été malaxée avec un ratio pondéral eau sur mortier sec de 0,15.

### Exemple E (selon l'invention)

Composition (en poids) :
- 9% de billes de verre expansé de taille supérieure à 0,5mm, dont la masse volumique est d'environ 540 kg/m³
- 60% de sable calcaire (masse volumique d'environ 2600 kg/cm³) dont au moins 50% en poids de taille supérieure à 0,5mm
- 25% de ciment CEM I
- 0,08% de viscosant de type éther de cellulose
- 5,8% de latex
- 0,02% d'agent entraîneur d'air de type sulfonaté (tensioactif).

La composition E a été malaxée avec un ratio pondéral eau sur mortier sec de 0,18.

### Exemple F (comparatif)

Composition (en poids) :
- 9% de billes de verre expansé de taille supérieure à 0,3mm, dont la masse volumique est d'environ 540 kg/m³
- 40% de sable calcaire (masse volumique d'environ 2600 kg/cm³) de taille 0-0,6 mm
- 25% de fillers de calcaire de taille inférieure à 0,1 mm
- 25% de ciment CEM I
- 0,08% de viscosant de type éther de cellulose
- 0,8% de latex
- 0,02% d'agent entraîneur d'air de type sulfonaté (tensioactif)
- 0,03% de fibres.

La composition F a été malaxée avec un ratio pondéral eau sur mortier sec de 0,21.

Le tableau 1 ci-après récapitule les caractéristiques physiques des enduits obtenus : masse volumique, résistivité à l'écoulement de l'air et résistance à la compression.

**Tableau 1**

| Mortier | Masse volumique | Résistivité à l'écoulement de l'air | Résistance à la compression |
|---|---|---|---|
| Exemple A | 330 kg/m³ | 4,6.10⁴ N.s.m⁻⁴ | 0,52 MPa |
| Exemple B | 540 kg/m³ | 1,2.10⁶ N.s.m⁻⁴ | 1,8 MPa |
| Exemple C | 1020 kg/m³ | 6,0.10⁵ N.s.m⁻⁴ | // |
| Exemple D | 891 kg/m³ | 4,2.10⁴ N.s.m⁻⁴ | 1,9 MPa |
| Exemple E | 815 kg/m³ | 6,0.10⁴ N.s.m⁻⁴ | 1,7 MPa |
| Exemple F | 942 kg/m³ | > 10⁶ N.s.m⁻⁴ | // |

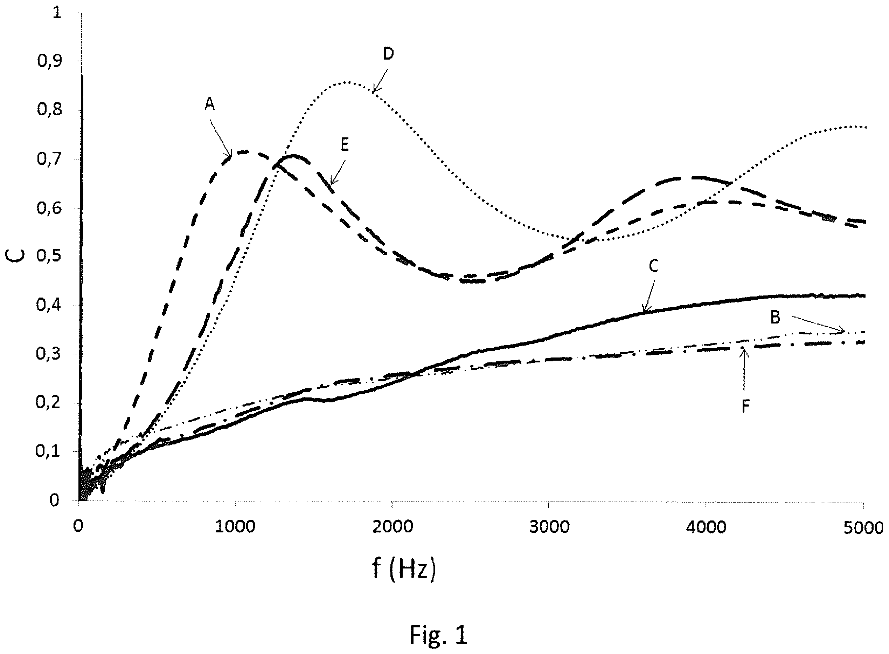

La Figure 1 représente le facteur d'absorption acoustique (noté C) des enduits pour des fréquences (notées f) comprises entre 0 et 5000 Hz.

L'enduit formé à partir de la composition A comprenant 69% de granulats légers possède de bonnes propriétés acoustiques. Cependant, l'enduit est peu dense et possède en conséquence une faible résistance à la compression. De plus, l'ajout d'une si grande quantité de granulats légers entraine un coût élevé.

L'enduit formé à partir de la composition B comprenant 52% de granulats légers est plus dense que l'enduit A et meilleur d'un point de vue mécanique. Il possède cependant une résistivité à l'écoulement de l'air élevée et de mauvaises propriétés d'absorption acoustique.

L'enduit formé à partir de la composition C, qui ne contient pas de granulats légers, possède une forte densité. Cependant, la résistivité à l'écoulement de l'air est élevée et ses propriétés d'absorption acoustique faibles.

L'enduit formé à partir de la composition F, dont la fraction massique de granulats ayant une taille d'au moins 0,5 mm est trop faible, possède une densité élevée, mais sa résistivité à l'écoulement de l'air est élevée et ses propriétés d'absorption acoustique faibles.

Ces exemples comparatifs montrent qu'il est particulièrement difficile d'allier de bonnes propriétés acoustiques avec une bonne résistance mécanique.

Les enduits (selon l'invention) formés à partir des compositions D et E possèdent en revanche à la fois une forte densité et une faible résistivité à l'écoulement de l'air. Ces caractéristiques leur confèrent de bonnes propriétés d'absorption acoustique et une bonne résistance à la compression.

## Revendications

1. Enduit, notamment destiné à la correction acoustique, comprenant :
- au moins un liant minéral,
- des granulats, dont :
∘ des granulats légers, dont la masse volumique est d'au plus 700 kg/m³, en une teneur d'au moins 4% et d'au plus 20% en poids par rapport au poids de l'enduit,
∘ des granulats lourds, dont la masse volumique est d'au moins 1500 kg/m³, en une teneur d'au moins 50% en poids par rapport au poids de l'enduit,
la fraction massique des granulats ayant une taille d'au moins 0,5 mm étant d'au moins 40%, où par taille des granulats on entend le diamètre équivalent déterminé par tamisage à sec,
ledit enduit présentant une masse volumique allant de 700 à 1200 kg/m³ et une résistivité à l'écoulement de l'air selon la norme ISO 9053 :1991 allant de 1.10⁴ N.s.m⁻⁴ à 5.10⁵ N.s.m-⁴.

2. Enduit selon la revendication 1, dans lequel au moins un liant minéral est choisi parmi :
- les ciments Portland, les ciments alumineux, les ciments sulfoalumineux, les ciments bélitiques, les laitiers de haut fourneau, les ciments phosphomagnésiens, les ciments de mélange pouzzolaniques comprenant éventuellement des cendres volantes, des fumées de silice, du calcaire, du schiste calciné et/ou des pouzzolanes naturelles ou calcinées, seuls ou en mélange, et/ou,
- une source de sulfate de calcium choisie parmi le plâtre ou hémihydrate, le gypse et/ou l'anhydrite, et/ou
- de la chaux aérienne ou hydraulique, naturelle ou artificielle.

3. Enduit selon l'une des revendications précédentes, dans lequel les granulats légers sont choisis parmi la perlite, la vermiculite, les billes de verre expansé, les microsphères creuses de verre, les cénosphères, les silicates expansés, les aérogels, les billes de polystyrène expansé, le liège et leurs mélanges.

4. Enduit selon l'une des revendications précédentes, dans lequel la teneur en granulats légers est d'au plus 15%, notamment 12% en poids, et d'au moins 6% en poids par rapport au poids de l'enduit.

5. Enduit selon l'une des revendications précédentes, dans lequel les granulats lourds sont choisis parmi les sables de quartz, les sables de calcaire, les sables siliceux et leurs mélanges.

6. Enduit selon l'une des revendications précédentes, dans lequel la teneur totale en granulats est comprise entre 60 et 90%, notamment 70 et 85% en poids et la teneur totale en liant minéral est comprise entre 10 et 40%, notamment entre 15 et 30% en poids par rapport au poids de l'enduit.

7. Enduit selon l'une des revendications précédentes, dans lequel le rapport pondéral entre la teneur totale en granulats et la teneur totale en liant minéral est d'au moins 2, notamment 3.

8. Utilisation d'un enduit selon l'une des revendications précédentes, comme enduit intérieur déposé sur murs, cloisons et/ou plafonds ou comme enduit extérieur, notamment de façade.

9. Utilisation selon la revendication précédente, dans laquelle l'enduit est déposé sous forme d'une couche de 1 à 3 cm directement sur un mur, ou sous forme d'une couche de 1 à 7 mm directement sur un matériau absorbant acoustique, notamment de la laine minérale.

10. Composition de mortier sec prêt à gâcher, apte à former après gâchage et durcissement un enduit selon l'une des revendications 1 à 7, ladite composition comprenant :
- au moins un liant minéral,
- des granulats, dont :
∘ des granulats légers, dont la masse volumique est d'au plus 700 kg/m³, en une teneur d'au moins 4% et d'au plus 20% en poids par rapport au poids de la composition,
∘ des granulats lourds, dont la masse volumique est d'au moins 1500 kg/m³, en une teneur d'au moins 50% en poids par rapport au poids de la composition,
la fraction massique des granulats ayant une taille d'au moins 0,5 mm étant d'au moins 40%,
- au moins un agent entraîneur d'air de type tensioactif,
- au moins un agent viscosant.

11. Composition selon la revendication précédente, dans laquelle l'agent entraîneur d'air est choisi parmi les acides gras organiques, les composés sulfatés, les composés sulfonatés et/ou les résines naturelles du bois.

12. Composition selon l'une des revendications selon l'une des revendications 10 ou 11, dans laquelle l'agent viscosant est choisi parmi les alcools polyvinyliques, les éthers d'amidon, les éthers de cellulose, les éthers de guar ou les argiles telles que la bentonite.

13. Procédé de préparation d'un enduit selon l'une des revendications 1 à 7, dans lequel on mélange la composition de mortier sec selon l'une des revendications 10 à 12 avec de l'eau de gâchage dans un mélangeur pour former un mortier humide, puis l'on dépose ledit mortier humide sur le substrat à enduire.

14. Utilisation de l'enduit selon l'une des revendications 1 à 7 pour absorber les sons.

## Patentansprüche

1. Putz, der insbesondere für die Schallkorrektur bestimmt ist, umfassend:
- mindestens ein mineralisches Bindemittel,
- Granulate, darunter:
∘ leichte Granulate, deren Dichte höchstens 700 kg/m³ beträgt, in einem Gehalt von mindestens 4 Gew.-% und höchstens 20 Gew.-%, bezogen auf das Gewicht des Putzes,
∘ schwere Granulate, deren Dichte mindestens 1500 kg/m³ beträgt, in einem Gehalt von mindestens 50 Gew.-%, bezogen auf das Gewicht des Putzes,
wobei der Massenanteil der Granulate, die eine Größe von mindestens 0,5 mm besitzen, mindestens 40 % beträgt, wobei unter Größe der Granulate der äquivalente Durchmesser zu verstehen ist, der durch Trockensieben bestimmt wird,
wobei der Putz eine Dichte von 700 bis 1200 kg/m³ und einen Luftströmungswiderstand gemäß der ISO-Norm 9053 :1991 von 1.10⁴ N.s.m⁻⁴ bis 5.10⁵ N.s.m⁻⁴ vorweist.

2. Putz nach Anspruch 1, wobei mindestens ein mineralisches Bindemittel ausgewählt ist aus:
- Portlandzementen, Tonerdezementen, Sulfoaluminiumzementen, Belititzementen, Hochofenschlacken, Phosphomagnesiumzementen, Puzzolanmischzementen, umfassend gegebenenfalls Flugstaub Siliciumdioxidrauchgasen, Kalkstein, gebrannten Schiefer und/oder natürliche oder gebrannte Puzzolane, allein oder in Mischung, und/oder,
- einer Quelle von Calciumsulfat, die aus Gips oder Halbhydrat, Selenit und/oder Anhydrit ausgewählt ist, und/oder
- natürlichem oder künstlichem Luft- oder hydraulischem Kalk.

3. Putz nach einem der vorstehenden Ansprüche, wobei die leichten Granulate aus Perlit, Vermiculit, Schaumglaskugeln, Glasmikrohohlkugeln, Cenosphären, Schaumsilikaten, Aerogelen, Schaumpolystyrolkugeln, Kork und deren Mischungen ausgewählt sind.

4. Putz nach einem der vorstehenden Ansprüche, wobei der Gehalt an leichten Granulaten höchstens 15 Gew.-%, insbesondere 12 Gew.-%, und mindestens 6 Gew.-%, bezogen auf das Gewicht des Putzes, beträgt.

5. Putz nach einem der vorstehenden Ansprüche, wobei die schweren Granulate aus Quarzsanden, Kalksanden, Kieselsanden und deren Mischungen ausgewählt sind.

6. Putz nach einem der vorstehenden Ansprüche, wobei der Gesamtgehalt an Granulaten zwischen 60 und 90 Gew.-%, insbesondere 70 und 85 Gew.-%, und der Gesamtgehalt an mineralischem Bindemittel zwischen 10 und 40 Gew.-%, insbesondere 15 und 30 Gew.-%, bezogen auf das Gewicht des Putzes, beträgt.

7. Putz nach einem der vorstehenden Ansprüche, wobei das Gewichtsverhältnis zwischen dem Gesamtgehalt an Granulaten und dem Gesamtgehalt an mineralischem Bindemittel mindestens 2, insbesondere 3, beträgt.

8. Verwendung eines Putzes nach einem der vorstehenden Ansprüche als Innenputz, der auf Wände, Trennwände und/oder Decken aufgebracht wird, oder als Außenputz, insbesondere für Fassaden.

9. Verwendung nach dem vorstehenden Anspruch, wobei der Putz in Form einer Schicht von 1 bis 3 cm direkt auf eine Wand oder in Form einer Schicht von 1 bis 7 mm direkt auf ein schallabsorbierendes Material, insbesondere Mineralwolle, aufgebracht wird.

10. Anrührfertige Trockenmörtelzusammensetzung, die geeignet ist, nach einem Anrühren und Aushärten einen Putz nach einem der Ansprüche 1 bis 7 auszubilden, die Zusammensetzung umfassend:
- mindestens ein mineralisches Bindemittel,
- Granulate, darunter:
∘ leichte Granulate, deren Dichte höchstens 700 kg/m³ beträgt, in einem Gehalt von mindestens 4 Gew.-% und höchstens 20 Gew.-%, bezogen auf das Gewicht der Zusammensetzung,
∘ schwere Granulate, deren Dichte mindestens 1500 kg/m³ beträgt, in einem Gehalt von mindestens 50 Gew.-%, bezogen auf das Gewicht der Zusammensetzung,
wobei der Massenanteil der Granulate, die eine Größe von mindestens 0,5 mm besitzen, mindestens 40 % beträgt,
- mindestens ein Luftporenbildnermittel von einem Tensidtyp,
- mindestens ein Viskositätsmittel.

11. Zusammensetzung nach dem vorstehenden Anspruch, wobei das Luftporenbildnermittel aus organischen Fettsäuren, Sulfatverbindungen, Sulfonatverbindungen und/oder natürlichen Holzharzen ausgewählt ist.

12. Zusammensetzung nach einem der Ansprüche 10 oder 11, wobei das Viskositätsmittel aus Polyvinylalkoholen, Stärkeethern, Celluloseethern, Guarethern oder Tonen wie Bentonit ausgewählt ist.

13. Verfahren zum Herstellen eines Putzes nach einem der Ansprüche 1 bis 7, wobei die Trockenmörtelzusammensetzung nach einem der Ansprüche 10 bis 12 mit Anrührwasser in einem Mischer zum Ausbilden eines Nassmörtels mischt, dann den Nassmörtel auf das zu verputzende Substrat aufbringt.

14. Verwendung des Putzes nach einem der Ansprüche 1 bis 7 zum Absorbieren der Klänge.

## Claims

1. A plaster, in particular intended for acoustic correction, comprising:
- at least one mineral binder,
- aggregates, including:
∘ light aggregates, the density of which is at most 700 kg/m3, in a content of at least 4% and of at most 20% by weight relative to the weight of the plaster,
∘ heavy aggregates, the density of which is at least 1500 kg/m3, in a content of at least 50% by weight relative to the weight of the plaster,
the weight fraction of aggregates having a size of at least 0.5 mm being at least 40%, wherein the size of the aggregates is understood to mean the equivalent diameter determined by dry screening,
said plaster having a density ranging from 700 to 1200 kg/m³ and an air flow resistivity according to the standard ISO 9053:1991 ranging from 1×10⁴ N.s.m⁻⁴ to 5×10⁵ N.s.m⁻⁴.

2. The plaster as claimed in claim 1, wherein at least one mineral binder is selected from:
- Portland cements, high-alumina cements, sulfoaluminate cements, belite cements, blast furnace slags, phosphomagnesia cements, pozzolan blended cements, optionally comprising fly ash, silica fumes, limestone, calcined schist and/or natural or calcined pozzolans, alone or as a mixture, and/or,
- a source of calcium sulfate selected from plaster or hemihydrate, gypsum and/or anhydrite, and/or
- natural or synthetic, non-hydraulic or hydraulic lime.

3. The plaster as claimed in either of the preceding claims, wherein the light aggregates are selected from perlite, vermiculite, expanded glass beads, hollow glass microspheres, cenospheres, expanded silicates, aerogels, expanded polystyrene beads, cork and mixtures thereof.

4. The plaster as claimed in one of the preceding claims, wherein the content of light aggregates is at most 15%, in particular 12% by weight, and at least 6% by weight relative to the weight of the plaster.

5. The plaster as claimed in one of the preceding claims, wherein the heavy aggregates are selected from quartz sands, limestone sands, siliceous sands and mixtures thereof.

6. The plaster as claimed in one of the preceding claims, wherein the total content of aggregates is between 60% and 90%, in particular 70% and 85% by weight and the total content of mineral binder is between 10% and 40%, in particular between 15% and 30% by weight relative to the weight of the plaster.

7. The plaster as claimed in one of the preceding claims, wherein the weight ratio between the total content of aggregates and the total content of mineral binder is at least 2, in particular 3.

8. The use of a plaster as claimed in one of the preceding claims, as interior plaster deposited on walls, partitions and/or ceilings, or as exterior plaster, in particular facade render.

9. The use as claimed in the preceding claim, wherein the plaster is deposited in the form of a 1 to 3 cm layer directly on a wall, or in the form of a 1 to 7 mm layer directly on a sound absorbing material, in particular mineral wool.

10. A ready-to-mix dry mortar composition, capable of forming, after mixing and hardening, a plaster as claimed in one of claims 1 to 7, said composition comprising:
- at least one mineral binder,
- aggregates, including:
∘ light aggregates, the density of which is at most 700 kg/m3, in a content of at least 4% and of at most 20% by weight relative to the weight of the composition,
∘ heavy aggregates, the density of which is at least 1500 kg/m3, in a content of at least 50% by weight relative to the weight of the composition, the weight fraction of aggregates having a size of at least 0.5 mm being at least 40%,
- at least one air-entraining agent of surfactant type,
- at least one viscosifying agent.

11. The composition as claimed in the preceding claim, wherein the air-entraining agent is selected from organic fatty acids, sulfate compounds, sulfonate compounds and/or natural wood resins.

12. The composition as claimed in either of claims 10 and 11, wherein the viscosifying agent is selected from polyvinyl alcohols, starch ethers, cellulose ethers, guar ethers or clays such as bentonite.

13. A process for preparing a plaster as claimed in one of claims 1 to 7, wherein the dry mortar composition as claimed in one of claims 10 to 12 is mixed with mixing water in a mixer in order to form a wet mortar, then said wet mortar is deposited on the substrate to be coated.

14. The use of the plaster as claimed in one of claims 1 to 7 for absorbing sounds.
